(19) Europäisches Patentamt / European Patent Office / Office européen des brevets

(11) **EP 3 899 110 B1**

(12) **FASCICULE DE BREVET EUROPEEN**

(45) Date de publication et mention
de la délivrance du brevet:
**05.10.2022 Bulletin 2022/40**

(21) Numéro de dépôt: **19842831.0**

(22) Date de dépôt: **17.12.2019**

(51) Classification Internationale des Brevets (IPC):
**C25F 3/22** *(2006.01)*    **B23H 3/08** *(2006.01)*
**B23H 9/10** *(2006.01)*    **C25D 3/56** *(2006.01)*

(52) Classification Coopérative des Brevets (CPC):
**B23H 3/08; C25D 3/562; C25F 3/22;** B23H 9/10

(86) Numéro de dépôt international:
**PCT/FR2019/053122**

(87) Numéro de publication internationale:
**WO 2020/128304 (25.06.2020 Gazette 2020/26)**

(54) **ÉLECTROLYTE POUR L'USINAGE ÉLECTROCHIMIQUE DE SUPERALLIAGES BASES NICKEL TYPE GAMMA-GAMMA PRIME**

ELEKTROLYT ZUR ELEKTROCHEMISCHEN BEARBEITUNG VON SUPERLEGIERUNGEN AUF DER BASIS VON NICKEL DES TYPS GAMMA-GAMMA-STRICH

ELECTROLYTE FOR ELECTROCHEMICAL MACHINING OF GAMMA-GAMMA PRIME TYPE NICKEL-BASED SUPERALLOYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **17.12.2018  FR 1873037**

(43) Date de publication de la demande:
**27.10.2021 Bulletin 2021/43**

(73) Titulaires:
  • **SAFRAN AIRCRAFT ENGINES**
    **75015 Paris (FR)**
  • **Université de Lorraine**
    **54052 Nancy Cedex (FR)**
  • **Centre national de la recherche scientifique**
    **75016 Paris (FR)**

(72) Inventeurs:
  • **MSAKNI MALOUCHE, Mariem**
    **77550 MOISSY-CRAMAYEL (FR)**
  • **LECOMTE, Janvier**
    **77550 MOISSY-CRAMAYEL (FR)**
  • **RANCIC, Mickael**
    **77550 MOISSY-CRAMAYEL (FR)**
  • **STEIN, Nicolas**
    **57000 METZ (FR)**
  • **BOULANGER, Clotilde**
    **57420 COIN LES CUVRY (FR)**

(74) Mandataire: **Cabinet Beau de Loménie**
    **158, rue de l'Université**
    **75340 Paris Cedex 07 (FR)**

(56) Documents cités:
  **RU-C1- 2 010 895    SU-A1- 419 574**
  **US-A- 5 171 408    US-A1- 2016 349 621**

  • **J. MITCHELL-SMITH ET AL: "Transitory electrochemical masking for precision jet processing techniques", JOURNAL OF MANUFACTURING PROCESSES, vol. 31, 1 décembre 2017 (2017-12-01), pages 273-285, XP055677415, US ISSN: 1526-6125, DOI: 10.1016/j.jmapro.2017.11.028**

## Description

### Domaine Technique

Cette invention concerne le domaine des électrolytes pour l'usinage électrochimique (ECM) des superalliages base nickel de type $\gamma$-$\gamma'$ (gamma-gamma prime).

### Technique antérieure

L'ECM est un procédé d'usinage non conventionnel. Ce procédé vise principalement les matériaux conducteurs électriques. Le principe de l'ECM est basé sur la dissolution anodique d'une pièce (anode) a l'aide d'un outil appelé cathode en présence d'un électrolyte conducteur ionique. La distance inter-électrode (gap) est définie comme la distance entre la pièce à usiner et la cathode. Elle est de l'ordre de 0,1 à 1 mm.

L'usinage électrochimique de précision (PECM) repose sur le même principe d'oxydation anodique du métal. Néanmoins, il se distingue de l'ECM par l'imposition d'un courant pulsé et non continu. Le courant est synchronisé à une oscillation de la cathode. Cette oscillation est accompagnée d'un mouvement de translation rectiligne, mais également par un plus faible gap (10 à 200 $\mu$m). Le procédé devient ainsi sensible à la formation des bulles d'hydrogène qui se forment à la cathode et perturbent l'efficacité du procédé.

Dans les pratiques d'aujourd'hui, l'usinage des superalliages base nickel de type $\gamma$-$\gamma'$ est réalisé dans un d'électrolyte à base de $NaNO_3$ à des concentrations comprises entre 8 % et 20 % en poids par rapport au poids total de la solution.

L'usinage électrochimique (ECM) et ses dérivés (ECM de précision (PECM)), dépôt électrochimique (ECD), polissage électrochimique (ECG) repose sur la dissolution anodique du métal. Cette dissolution peut ne pas être homogène en raison de la complexité de la microstructure des alliages $\gamma$-$\gamma'$ qui en plus de la matrice austénitique renferment des précipités $\gamma'$, des carbures et des nitrocarbures insolubles, ce qui forme une surface rugueuse lors de l'usinage et nécessite des opérations supplémentaires de reconditionnement des surfaces usinées. De cette dissolution résulte également une formation de boue constituée principalement d'hydroxydes et d'oxydes métalliques dont une partie reste collée sur les surfaces usinées électro-chimiquement ce qui pénalise le rendement de dissolution et les rugosités des pièces à usiner. Cette dissolution est également accompagnée par la formation de dihydrogène à la surface de la cathode ce qui entraîne une fluctuation et une perturbation du procédé. Ces bulles de gaz formées entraînent une perturbation du procédé en raison de la faible distance entre la cathode et la pièce à usiner (gap compris entre 10 $\mu$m et 200 $\mu$m pour l'usinage électrochimique de précision (PECM)) ce qui diminue le rendement.

Un électrolyte pour l'usinage électrochimique de certains métaux (Fe, Cu, Ni, Al, Sn, Cr et Zn) ainsi que leurs alliages est connu. Cet électrolyte se base principalement sur l'ajout d'agents complexants pouvant être l'EDTA, HEDTA, NTA ou de l'acide citrique avec un mélange de sel inorganique à base de $NaNO_3$, NaCl, $NaClO_4$, $Na_2SO_4$, $KNO_3$, KCl, $KClO_4$, $K_2SO_4$, $LiNO_3$, LiCl, $LiClO_4$, et $Li_2SO_4$ pour un intervalle de concentration allant de 100 g/L à 500 g/L. L'électrolyte renferme aussi un agent réducteur tel que l'acide ascorbique. Toutefois cet électrolyte ne permet pas de complexer la phase durcissante $\gamma$-$\gamma'$ qui est insoluble mais seulement la matrice.

Il existe donc un besoin de trouver un nouvel électrolyte destiné à l'usinage électrochimique des superalliages base nickel de type $\gamma$-$\gamma'$ et ne présentant pas les inconvénients de l'art antérieur.

Mitchell-Smith et al., Journal for Manufacturing Processes 31 (2018) 273-285 divulgue un électrolyte pour l'usinage électrochimique de l'Inconel 718. US 5,171,408, RU 2 010 895 C1, SU 419 574 et US 2016/0349621 A1 divulguent des électrolytes pour l'usinage électrochimique.

### Exposé de l'invention

Les inventeurs ont ainsi découvert de façon surprenante qu'un électrolyte à base de $NaNO_3$ et présentant une composition particulière était parfaitement adapté à l'usinage électrochimique des superalliages base nickel de type $\gamma$-$\gamma'$ sans présenter les inconvénients de l'art antérieur et en particulier que cet électrolyte permet de diminuer la surtension de l'hydrogène produit à la surface de la cathode, d'augmenter le rendement de dissolution et produit un effet meilleur sur la diminution de la rugosité.

La présente invention concerne donc un électrolyte pour l'usinage électrochimique de superalliage base nickel $\gamma$-$\gamma'$ comprenant, avantageusement constituée essentiellement de, en particulier constituée de :

- du $NaNO_3$ en une teneur comprise entre 10 et 50%, avantageusement entre 10 et 40%, en particulier entre 10 et 30%, en poids par rapport au poids total de l'électrolyte ;
- un additif choisi dans le groupe constitué par KBr, NaBr, KI, NaI et leurs mélanges, en particulier le KBr, en un ratio molaire additif/$NaNO_3$ compris entre 1 et 15, avantageusement entre 1 et 5, plus particulièrement entre 1 et 3, encore plus particulièrement entre 1 et 2,35, de façon particulièrement avantageuse entre 1,5 et 2,35, plus avantageusement de 1,5 ;

- éventuellement un complexant à base d'acide éthylènediaminetétraacétique en une teneur comprise entre 1 et 5% en poids par rapport au poids total de l'électrolyte à un pH compris entre 6 et 12, avantageusement 6 ;
- éventuellement un surfactant anionique en une teneur comprise entre 1 et 5% en poids par rapport au poids total de l'électrolyte ;
- éventuellement du NaOH pour obtenir le pH approprié ;
- un solvant aqueux, avantageusement l'eau.

Le superalliage base nickel $\gamma$-$\gamma'$ peut par exemple être l'Udimet 720 de Waspaloy. Il peut s'agir ainsi d'un alliage NiCrCoTiMoAl, ayant par exemple la composition suivante en % en poids: C 0,0100-0,0200; Cr 15,5-16,5; Co 14,0-15,5; Ti 4,75-5,25; Mo 2,75-3,25; Al 2,25-2,75 ; W 1,00-1,50; Ni solde et pouvant contenir du zirconium (0,0250-0,0500) et/ou du bore (0,0100-0,0200).

Le $NaNO_3$ en mélange avec les additifs permet d'assurer une dissolution homogène et d'augmenter le rendement électrochimique pour tous les superalliages base nickel qui renferment la phase $\gamma'$ dans leur microstructure.

Un agent complexant à base d'acide éthylènediaminetétraacétique (EDTA), c'est à dire l'EDTA (qui peut éventuellement être mono ou dihydraté), l'HEDTA : acide hydroxyéthyléthylènediaminetriacétique, ou l'EDTA disodique ou tétrasodique, plus particulièrement l'EDTA, peut être présent dans l'électrolyte. Il permet d'inhiber la formation de boue, de faciliter la dissolution anodique des précipités insolubles $\gamma'$ et de diminuer la rugosité des surfaces. Afin d'obtenir le pH voulue (compris entre 6 et 12, avantageusement 6) nécessaire à la mise en œuvre de ce complexant, il est possible de rajouter du NaOH à l'électrolyte selon l'invention.

Un surfactant anionique peut être présent dans l'électrolyte. Il permet également de diminuer la surtension de l'hydrogène produit à la surface de la cathode et qui entraîne des perturbations lors du processus d'usinage et d'augmenter le rendement de dissolution. Dans un mode de réalisation avantageux, le surfactant anionique est choisi dans le groupe constitué par la saccharine, le dodécylsulfate de sodium, les sulfonates, les carboxylates, les sulfocinates les phosphates et leurs mélanges, avantageusement il est choisi dans le groupe constitué par la saccharine, le dodécylsulfate de sodium et leurs mélanges.

L'électrolyte selon l'invention permet d'assurer une dissolution anodique homogène de toutes les phases du superalliage base nickel $\gamma$-$\gamma'$. Il permet également de garantir de bons états de surface avec une optimisation du rendement et de la vitesse de dissolution et une diminution des résidus formés.

L'électrolyte selon l'invention est préparé par des méthodes bien connus de l'homme du métier, par simple ajout et mélange des différents composants dans le solvant aqueux.

La présente invention concerne en outre l'utilisation de l'électrolyte selon l'invention pour l'usinage électrochimique de superalliage base nickel $\gamma$-$\gamma'$, en particulier l'usinage électrochimique de précision de superalliage base nickel y-y', le dépôt électrochimique (ECD) de superalliage base nickel $\gamma$-$\gamma'$ ou le polissage électrochimique (ECG) de superalliage base nickel $\gamma$-$\gamma'$.

Elle concerne de plus un procédé d'usinage électrochimique de superalliage base nickel $\gamma$-$\gamma'$ comprenant les étapes successives suivantes :

a- fournir une pièce en superalliage base nickel $\gamma$-$\gamma'$ en tant qu'anode ;
b- fournir un outil en tant que cathode ;
c- fournir un électrolyte selon la présente invention ;
d- immerger l'anode et la cathode dans l'électrolyte avec une distance inter électrode comprise entre 0,1 et 1 mm ;
e- appliquer un courant continu entre l'anode et la cathode de façon à obtenir la dissolution anodique de la pièce en superalliage base nickel $\gamma$-$\gamma'$ ;
f- récupération de la pièce usinée obtenue à l'étape e).

L'outil utilisable en tant que cathode dans l'étape b) du procédé d'usinage électrochimique selon l'invention est principalement en acier inoxydable, mais peut également être en alliages de titane, en alliages de platine, en alliages base cuivre ou du cupro de tungstène.

Le courant de l'étape e) peut avoir une tension dans la gamme de 4 à 30 V. Sa densité de courant est avantageusement de $12,8 A/cm^2$. L'application du courant continu dans le cadre du procédé d'usinage électrochimique selon l'invention permet de faire circuler l'électrolyte de façon continue entre la cathode et l'anode pendant l'étape e) avec un débit suffisant, en particulier obtenu à l'aide d'une pression comprise entre 3,5 et 4 bar (entre 350 000 et 400 000 Pa), afin d'évacuer les résidus de la dissolution anodique (boue et dihydrogène) et de garantir une vitesse de dissolution optimale. La vitesse de dissolution est la différence de masse avant et après usinage divisée par le temps d'usinage. Elle est avantageusement supérieure ou égale à 80mg/min. Le rendement de dissolution optimal avantageusement obtenu par le procédé selon l'invention est supérieur ou égal à 90% en masse. Il est calculé comme indiqué dans l'exemple comparatif 1.

La présente invention concerne enfin un procédé d'usinage électrochimique de précision de superalliage base nickel $\gamma$-$\gamma'$ comprenant les étapes successives suivantes :

A- fournir une pièce en superalliage base nickel $\gamma$-$\gamma'$ en tant qu'anode ;
B- fournir un outil en tant que cathode ;
C- fournir un électrolyte selon l'invention ;
D- immerger l'anode et la cathode dans l'électrolyte ;
E- appliquer un courant pulsé entre l'anode et la cathode, en synchronisation avec une éventuelle oscillation de la cathode, et accompagnée d'un éventuel mouvement de translation rectiligne de la cathode vers l'anode permettant d'obtenir une distance inter électrode minimale de 10 à 200 $\mu$m, de façon à obtenir la dissolution anodique de la pièce en superalliage base nickel $\gamma$-$\gamma'$;
F- récupération de la pièce usinée obtenue à l'étape E).

L'outil utilisable en tant que cathode dans l'étape B) du procédé d'usinage électrochimique selon l'invention est principalement en acier inoxydable, mais peut également être en alliages de titane, en alliages de platine, en alliages base cuivre ou du cupro de tungstène.

Le courant de l'étape E) peut avoir une tension pouvant aller de 6 V à 18,7 V. L'amplitude des oscillations peut être comprise entre 0,2 et 0,8 mm, préférentiellement 0,4mm. La fréquence des oscillations peut être comprise entre 27 à 70 Hz et la durée des d'impulsion peut être comprise entre 2 et 10mS.

L'étape E) peut être mise en œuvre avec ou sans oscillation de la cathode, avantageusement avec oscillation de la cathode. Si elle est mise en œuvre sans oscillation, un déplacement continu de la cathode (uniquement avec les impulsions courant) peut être présent.

L'étape E) peut également être mise en œuvre en mode dynamique (avec mouvement de translation rectiligne de la cathode vers l'anode) ou en mode statique (sans mouvement de translation rectiligne de la cathode vers l'anode), avec des impulsions courant et éventuellement avec des oscillations associées pour des opérations de polissage ou de reconditionnement de surface (enlèvement < 1mm). Ainsi l'étape E) du procédé selon l'invention peut être mise en œuvre en mode statique, sans mouvement de translation rectiligne de la cathode vers l'anode ou l'étape E) du procédé selon l'invention peut être mise en œuvre en mode dynamique avec mouvement de translation rectiligne de la cathode vers l'anode.

L'invention sera mieux comprise à la lumière de la description des figures et des exemples qui suivent.

## Brève description des dessins

La figure 1 représente le rendement de dissolution de la phase $\gamma'$ en condition ECM pour une faible densité de courant 178 mA/cm$^2$ en fonction de l'électrolyte utilisé (solution A ou B) de l'exemple comparatif n°1.

La figure 2 représente le rendement de dissolution de la phase $\gamma'$ en condition ECM pour une faible densité de courant 178 mA/cm$^2$ en fonction de l'électrolyte utilisé (solution A, B ou C) de l'exemple comparatif n°2.

## Exemples

### Exemple comparatif 1

La première étape a été de synthétiser séparément la phase durcissante $Ni_3Ti$ (phase $\gamma'$). Deux électrolytes ont ensuite été testés dans un procédé d ECM en conditions un peu écartés de l'ECM (gap supérieur à 2 mm et faible densité de courant : 178 mA/cm$^2$):

solution A : 2,35 M nitrate de sodium dans de l'eau
solution B : 2,35 M bromure de potassium dans de l'eau.

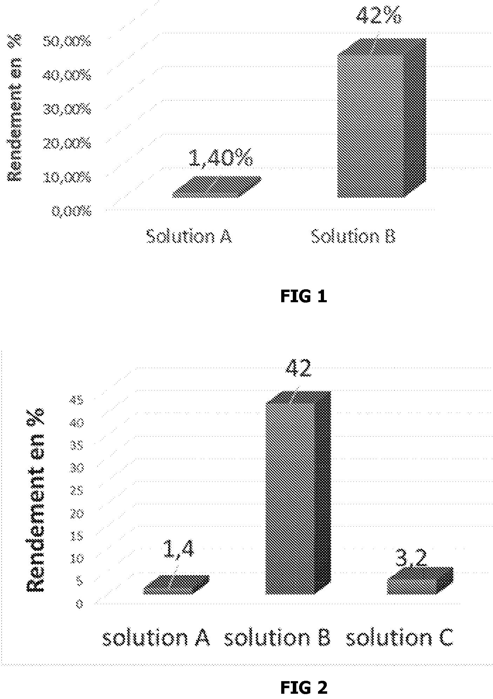

Les rendements de dissolution sont présentés sur la figure 1. Ils sont calculés de la façon suivante :
Nous avons considéré uniquement le nickel comme élément électroactif par soucis de simplification. La réaction anodique est alors :

$$Ni \rightarrow Ni^{2+} + 2e^-$$

La perte de masse théorique $\Delta W_{theo}$ des échantillons est établi à partir de la relation suivante :

$$\Delta Wtheo = \frac{M \times I \times t}{n \times F} \qquad (1)$$

M étant la masse molaire atomique du nickel, I le courant appliqué, t la durée de l'oxydation, n la valence des ions dissous (n=2) et F la constante de Faraday = 96 500 C/mol.

L'hypothèse que le rendement faradique est de 100 % a été émise. Le rendement est ensuite défini par :

$$\eta = \frac{\Delta Wexp}{\Delta Wtheo} \qquad (2)$$

avec $\Delta W_{exp}$ la différence de masse avant et après le test et suite à un nettoyage surfacique final.

On observe que la phase $\gamma'$ est pratiquement insoluble en milieu nitrate (milieu A) et passe de 1,4% à 42 % de rendement avec utilisation d'un milieu bromure de potassium (milieu B).

Toutefois, dans un procédé d'ECM similaire mais mis en œuvre sur le superalliage base nickel $\gamma$-$\gamma'$ Udimet 720 de Waspaloy en milieu B on a remarqué une altération en volume du matériau qui devient poreux. Il a paru nécessaire de trouver un électrolyte alternatif avec un compromis entre l'action des bromures et celle des nitrates

## Exemple 1

Electrolyte C = 1,6 M NaNO$_3$ +2,35 M KBr (ratio molaire KBr / NaNO$_3$ = 1,5), a été testé dans un procédé d'ECM identique à celui de l'exemple comparatif 1 mais mis en œuvre sur le superalliage base nickel $\gamma$-$\gamma'$ Udimet 720 de Waspaloy et on obtient de bons résultats, sans altération en volume du matériau.

Différent ratios molaire de NaNO$_3$ et KBr (R) ont également été testés comme indiqué dans le tableau 1 ci-dessous.

Tableau 1

| R = $\dfrac{[KBr]}{[NaNO3]}$ | 0 | 0,2 | 0,7 | 1 | 1,6 | 2,35 | $\infty$ |
|---|---|---|---|---|---|---|---|
| [KBr] mol/L | 0 | 0,5 | 1,6 | 2,35 | 2,35 | 2,35 | 2,35 |
| [NaNO$_3$] mol/L | 2,35 | 2,35 | 2,35 | 2,35 | 1,5 | 1 | 0 |

Un suivi de la microstructure a été réalisé après chaque essai en fonction des différents ratios. Les résultats les plus intéressants sont obtenus pour des ratios molaires compris entre 1 et 2,35.

Ainsi en milieu NaNO$_3$ et en absence de KBr (ratio molaire KBr / NaNO$_3$ = 0), la dissolution se fait de manière inhomogène. En effet, la matrice gamma est préférentiellement dissoute par rapport aux précipités gamma prime qui se déchaussent tout en laissant une surface rugueuse.

En introduisant le KBr, la taille ainsi que la dispersion des précipités gamme prime (particules grises) diminuent et le phénomène de dissolution + déchaussement observé en milieu NaNO$_3$, se transforme en phénomène de co-dissolution des deux phases (gamma et gamma prime).

Toutefois pour une proportion inférieure à 1 (Ratio molaire KBr / NaNO$_3$ < 1) l'effet désiré de la co-dissolution n'est pas assuré.

En revanche l'utilisation du milieu à base de 100 % KBr a été écartée en raison de l'altération de la surface après les essais d'anodisation.

## Exemple comparatif 2

Par ailleurs les solutions d'électrolyte suivantes ont été testées dans les mêmes conditions que dans l'exemple comparatif 1 :

Solution A : 2,35 M NaNO$_3$ dans de l'eau.
Solution B : 2,35 M KBr dans de l'eau.
Solution C : 2,35 M KCl dans de l'eau.

Les rendements de dissolution sont présentés sur la figure 2. On observe que la solution B qui comporte des bromures est plus efficace pour la dissolution de la phase gamma prime car les bromures en plus d'être un agent piqûrant, sont aussi des complexants et ce pouvoir de complexation est plus important que pour les chlorures qui font pourtant partie de la même famille que les bromures (famille des halogènes).

**Exemple 2**

Par ailleurs la solution d'électrolyte suivante a été testée dans les mêmes conditions que dans l'exemple 1 :

$$\text{Electrolyte} = 1{,}6 \text{ M NaNO}_3 + 2{,}35 \text{ M KBr (ratio molaire} = 1{,}5) + 0{,}1\text{M EDTA}$$
$$+ \text{ NaOH dans de l'eau (pH de 6).}$$

On observe la disparition de la couche d'oxyde métallique de la surface usinée, mais en revanche aucun problème de porosité sur le matériau n'est apparu. Les résultats obtenus sont meilleurs que ceux de l'exemple 1. La présence d'EDTA a donc un effet positif sur l'électrolyte et donc sur l'usinage.

**Exemple 3** :

Des coupes métallographiques ont également été réalisés après essai sur machine PECM dans les mêmes conditions que l'exemple comparatif 1 et comparées en milieu NaNO$_3$ (solution A de l'exemple comparatif 2), NaNO$_3$+KBr (Ratio molaire KBr / NaNO$_3$ (R) =2,35 de l'exemple 1) et NaNO$_3$+KBr+ 0,1 M EDTA (Ratio molaire KBr / NaNO$_3$ (R) =2,35) (Electrolyte = 1 M NaNO$_3$ +2,35 M KBr + 0,1M EDTA).

En milieu NaNO$_3$ (Ratio molaire KBr / NaNO$_3$ (R) =0) une couche de produit de résidus de dissolution est formée au niveau de la surface. L'élimination de cette couche demande des opérations supplémentaires telles que le décapage chimique ou l'élimination mécanique (sablage). En présence de KBr (Ratio molaire KBr / NaNO$_3$ = 2,35), cette couche est quasiment absente. Des analyses ICP ont également été réalisées sur les bains usés après opération d'usinage afin de déterminer la teneur des éléments dissous en fonction des différents milieux.

Le tableau 2 ci-dessous résume le pourcentage massique des éléments majoritaire du matériau.

Un net enrichissement a été observé en milieu dont le Ratio molaire KBr / NaNO$_3$ = 2,35 pour les éléments Ni, Ti et W par rapport au milieu NaNO$_3$. Cet enrichissement est plus prononcé en présence d'EDTA utilisé à hauteur de 0,1 M comme agent complexant.

Tableau 2 :

| | Ni (% en poids) | Cr (% en poids) | Co (% en poids) | Mo (% en poids) | Al (% en poids) | Ti (% en poids) | W (% en poids) |
|---|---|---|---|---|---|---|---|
| NaNO$_3$ | 46,9 | 22,5 | 16,3 | 4,6 | 0,0 | 1,2 | 3,9 |
| R = 2,35 | 50,7 | 21,1 | 14,9 | 5,0 | 0,7 | 3,0 | 4,8 |
| R= 2,35 avec EDTA | 49,9 | 14,3 | 13,6 | 5,7 | 1,1 | 4,4 | 6,5 |

**Revendications**

**1.** Electrolyte pour l'usinage électrochimique de superalliage base nickel γ-γ' comprenant

- du NaNO$_3$ en une teneur comprise entre 10 et 50% en poids par rapport au poids total de l'électrolyte ;
- un additif choisi dans le groupe constitué par KBr, NaBr, KI, NaI et leurs mélanges en un ratio molaire additif/NaNO$_3$ compris entre 1 et 15 ;
- éventuellement un complexant à base d'acide éthylènediaminetétraacétique en une teneur comprise entre 1 et 5% en poids par rapport au poids total de l'électrolyte à un pH compris entre 6 et 12, où le complexant à base d'acide éthylènediaminetetraacétique est l'acide éthylènediaminetetraacétique, qui peut éventuellement être mono ou dihydraté, l'acide hydroxyéthyléthylènediaminetriacétique, ou l'acide éthylènediaminetetraacétique disodique ou tétrasodique ;
- éventuellement un surfactant anionique en une teneur comprise entre 1 et 5% en poids par rapport au poids total de l'électrolyte
- éventuellement du NaOH pour obtenir le pH approprié ;
- un solvant aqueux.

**2.** Electrolyte selon la revendication 1, **caractérisé en ce qu'**il comprend un surfactant anionique, avantageusement choisi dans le groupe constitué par la saccharine, le dodécylsulfate de sodium, les sulfonates, les carboxylates, les sulfocinates les phosphates et leurs mélanges, plus avantageusement choisi dans le groupe constitué par la saccharine, le dodécylsulfate de sodium et leurs mélanges.

**3.** Electrolyte selon l'une quelconque des revendications 1 ou 2, **caractérisé en ce que** l'additif est le KBr.

**4.** Electrolyte selon l'une quelconque des revendications 1 à 3, **caractérisé en ce qu'**il comprend le complexant à base d'acide éthylènediaminetétraacétique, en particulier l'acide éthylènediaminetétraacétique.

**5.** Utilisation de l'électrolyte selon l'une quelconque des revendications 1 à 4 pour l'usinage électrochimique de superalliage base nickel γ-γ', en particulier l'usinage électrochimique de précision de superalliage base nickel γ-γ' ou le polissage électrochimique de superalliage base nickel γ-γ'.

**6.** Procédé d'usinage électrochimique de superalliage base nickel γ-γ' comprenant les étapes successives suivantes :

a- fournir une pièce en superalliage base nickel γ-γ' en tant qu'anode ;
b- fournir un outil en tant que cathode ;
c- fournir un électrolyte selon l'une quelconque des revendications 1 à 4 ;
d- immerger l'anode et la cathode dans l'électrolyte avec une distance inter électrode comprise entre 0,1 et 1 mm ;
e- appliquer un courant continu entre l'anode et la cathode de façon à obtenir la dissolution anodique de la pièce en superalliage base nickel γ-γ' ;
f- récupération de la pièce usinée obtenue à l'étape e).

**7.** Procédé d'usinage électrochimique de précision de superalliage base nickel γ-γ' comprenant les étapes successives suivantes :

A- fournir une pièce en superalliage base nickel γ-γ' en tant qu'anode ;
B- fournir un outil en tant que cathode ;
C- fournir un électrolyte selon l'une quelconque des revendications 1 à 4 ;
D- immerger l'anode et la cathode dans l'électrolyte ;
E- appliquer un courant pulsé entre l'anode et la cathode, en synchronisation avec une éventuelle oscillation de la cathode, et accompagnée d'un éventuel mouvement de translation rectiligne de la cathode vers l'anode permettant d'obtenir une distance inter électrode minimale de 10 à 200 μm, de façon à obtenir la dissolution anodique de la pièce en superalliage base nickel γ-γ' ;
F- récupération de la pièce usinée obtenue à l'étape E).

**8.** Procédé selon la revendication 7, **caractérisé en ce que** l'étape E) est mise en œuvre en mode statique, sans mouvement de translation rectiligne de la cathode vers l'anode.

**9.** Procédé selon la revendication 7, **caractérisé en ce que** l'étape E) est mise en œuvre en mode dynamique avec mouvement de translation rectiligne de la cathode vers l'anode.

**10.** Procédé selon l'une quelconque des revendications 7 à 9, **caractérisé en ce que** l'étape E) est mise en œuvre avec oscillation de la cathode.

**Patentansprüche**

**1.** Elektrolyt zur elektrochemischen Bearbeitung einer γ-γ'-Nickelbasis-Superlegierung, umfassend

- NaNO$_3$ in einem Gehalt zwischen 10 und 50 Gew.-%, bezogen auf das Gesamtgewicht des Elektrolyten,
- ein Additiv ausgewählt aus der Gruppe bestehend aus KBr, NaBr, KI, NaI und deren Mischungen in einem Molverhältnis Additiv / NaNO$_3$ im Bereich zwischen 1 und 15,
- eventuell einen Komplexbildner auf Basis von Ethylendiamintetraessigsäure in einem Gehalt zwischen 1 und 5 Gew.-% bezogen auf das Gesamtgewicht des Elektrolyten, bei einem pH-Wert zwischen 6 und 12, wobei der Komplexbildner auf Basis von Ethylendiamintetraessigsäure Ethylendiamintetraessigsäure ist, die eventuell Mono- oder Dihydrat, Hydroxyethylethylendiamintriessigsäure oder Dinatrium- oder Tetranatriumethylendiamintetraessigsäure sein kann;
- eventuell ein anionisches Tensid in einem Gehalt zwischen 1 und 5 Gew.-%, bezogen auf das Gesamtgewicht des Elektrolyten,
- eventuell NaOH um den geeigneten pH-Wert zu erhalten,
- ein wässriges Lösungsmittel.

2. Elektrolyt nach Anspruch 1, **dadurch gekennzeichnet, dass** er ein anionisches Tensid umfasst, das vorteilhafterweise ausgewählt ist aus der Gruppe bestehend aus Saccharin, Natriumdodecylsulfat, Sulfonaten, Carboxylaten, Sulfocinaten, Phosphaten und deren Mischungen, in vorteilhafter Weise ausgewählt aus der Gruppe bestehend aus Saccharin, Natriumdodecylsulfat und deren Mischungen.

3. Elektrolyt nach einem der Ansprüche 1 oder 2, **dadurch gekennzeichnet, dass** das Additiv KBr ist.

4. Elektrolyt nach einem der Ansprüche 1 bis 3, **dadurch gekennzeichnet, dass** er den Komplexbildner auf Basis von Ethylendiamintetraessigsäure, insbesondere Ethylendiamintetraessigsäure, enthält.

5. Verwendung des Elektrolyten nach einem der Ansprüche 1 bis 4 für die elektrochemische Bearbeitung einer $\gamma$-$\gamma$'-Nickelbasis-Superlegierung, insbesondere die elektrochemische Präzisionsbearbeitung einer $\gamma$-$\gamma$'-Nickelbasis-Superlegierung oder das elektrochemische Polieren einer $\gamma$-$\gamma$'-Nickelbasis-Superlegierung.

6. Verfahren zur elektrochemischen Bearbeitung einer $\gamma$-$\gamma$'-Nickelbasis-Superlegierung, umfassend die folgenden aufeinanderfolgenden Schritte:

   a- Bereitstellen eines Teils aus $\gamma$-$\gamma$'-Nickelbasis-Superlegierung als Anode,
   b- Bereitstellen eines Werkzeugs als Kathode,
   c- Bereitstellen eines Elektrolyten nach einem der Ansprüche 1 bis 4,
   d- Eintauchen der Anode und der Kathode in den Elektrolyten mit einem Abstand zwischen den Elektroden zwischen 0,1 und 1 mm,
   e- Anlegen eines Gleichstroms zwischen der Anode und der Kathode, um die anodische Auflösung des aus der $\gamma$-$\gamma$'-Nickelbasis-Superlegierung bestehenden Teils zu erreichen,
   f- Gewinnen des in Schritt e) erhaltenen bearbeiteten Teils.

7. Verfahren zur elektrochemischen Präzisionsbearbeitung einer $\gamma$-$\gamma$'-Nickelbasis-Superlegierung, umfassend die folgenden aufeinanderfolgenden Schritte:

   A- Bereitstellen eines Teils aus $\gamma$-$\gamma$'-Nickelbasis-Superlegierung als Anode,
   B- Bereitstellen eines Werkzeugs als Kathode,
   C- Bereitstellen eines Elektrolyten nach einem der Ansprüche 1 bis 4,
   D- Eintauchen der Anode und der Kathode in den Elektrolyten,
   E- Anlegen eines gepulsten Stroms zwischen der Anode und der Kathode, synchron mit einer möglichen Oszillation der Kathode und begleitet von einer eventuellen geradlinigen Translationsbewegung der Kathode in Richtung der Anode, was ermöglicht, einen Mindestabstand zwischen den Elektroden von 10 bis 200 $\mu$m zu erhalten, um die anodische Auflösung des Teils aus $\gamma$-$\gamma$'-Nickelbasis-Superlegierung zu erreichen,
   F- Gewinnen des in Schritt E) erhaltenen bearbeiteten Teils.

8. Verfahren nach Anspruch 7, **dadurch gekennzeichnet, dass** Schritt E) im statischen Modus ohne geradlinige Translationsbewegung der Kathode in Richtung der Anode durchgeführt wird.

9. Verfahren nach Anspruch 7, **dadurch gekennzeichnet, dass** Schritt E) im dynamischen Modus mit geradliniger Translationsbewegung der Kathode in Richtung der Anode durchgeführt wird.

10. Verfahren nach einem der Ansprüche 7 bis 9, **dadurch gekennzeichnet, dass** Schritt E) unter Oszillation der Kathode durchgeführt wird.

**Claims**

1. An electrolyte for the electrochemical machining of a $\gamma$-$\gamma'$ nickel-based superalloy, comprising

   - NaNO$_3$ in a content of between 10% and 50% by weight relative to the total weight of the electrolyte;
   - an additive selected from the group consisting of KBr, NaBr, KI, NaI and mixtures thereof in an additive/NaNO$_3$ molar ratio of between 1 and 15;
   - optionally, a complexing agent based on ethylenediaminetetraacetic acid in a content of between 1% and 5% by weight relative to the total weight of the electrolyte at a pH of between 6 and 12, wherein the complexing agent based on ethylenediaminetetraacetic acid is ethylenediaminetetraacetic acid, which may optionally be in monohydrate or dihydrate form, hydroxyethylethylenediaminetriacetic acid and disodium or tetrasodium ethylenediaminetetraacetic acid;
   - optionally, an anionic surfactant in a content of between 1% and 5% by weight relative to the total weight of the electrolyte;
   - optionally, NaOH to obtain the appropriate pH;
   - an aqueous solvent.

2. The electrolyte according to claim 1, **characterized in that** it comprises an anionic surfactant, advantageously selected from the group consisting of saccharin, sodium dodecylsulphate, sulfonates, carboxylates, sulfocinates, phosphates, and mixtures thereof, more advantageously selected from the group consisting of saccharin, sodium dodecylsulphate, and mixtures thereof.

3. The electrolyte according to either one of claims 1 and 2, **characterized in that** the additive is KBr.

4. The electrolyte according to any one of claims 1 to 3, **characterized in that** it comprises a complexing agent based on ethylenediaminetetraacetic acid, in particular ethylenediaminetetraacetic acid.

5. The use of the electrolyte according to any one of claims 1 to 4 for the electrochemical machining of a $\gamma$-$\gamma'$ nickel-based superalloy, in particular the precision electrochemical machining of a $\gamma$-$\gamma'$ nickel-based superalloy or the electrochemical grinding of a $\gamma$-$\gamma'$ nickel-based superalloy.

6. A process for the electrochemical machining of a $\gamma$-$\gamma'$ nickel-based superalloy, comprising the following successive steps:

   a- providing a $\gamma$-$\gamma'$ nickel-based superalloy workpiece as an anode;
   b- providing a tool as a cathode;
   c- providing an electrolyte as claimed in any one of claims 1 to 4;
   d- immersing the anode and the cathode in the electrolyte with an inter-electrode distance of between 0.1 and 1 mm;
   e- applying a continuous current between the anode and the cathode so as to achieve the anodic dissolution of the $\gamma$-$\gamma'$ nickel-based superalloy workpiece;
   f- recovering the machined workpiece obtained in step e).

7. A process for the precision electrochemical machining of a $\gamma$-$\gamma'$ nickel-based superalloy, comprising the following successive steps:

   A- providing a $\gamma$-$\gamma'$ nickel-based superalloy workpiece as an anode;
   B- providing a tool as a cathode;
   C- providing an electrolyte as claimed in any one of claims 1 to 4;
   D- immersing the anode and the cathode in the electrolyte;
   E- applying a pulsed current between the anode and the cathode, synchronized with a possible oscillation of the cathode, and accompanied by a possible rectilinear translational movement of the cathode towards the anode making it possible to obtain a minimum inter-electrode distance of 10 to 200 $\mu$m, so as to achieve the anodic dissolution of the $\gamma$-$\gamma'$ nickel-based superalloy workpiece;

F- recovering the machined workpiece obtained in step E).

8. The process according to claim 7, **characterized in that** step E) is implemented in static mode, without rectilinear translational movement of the cathode towards the anode.

9. The process according to claim 7, **characterized in that** step E) is implemented in dynamic mode, with rectilinear translational movement of the cathode towards the anode.

10. The process according to any one of claims 7 to 9, **characterized in that** step E) is implemented with oscillation of the cathode.

**FIG 1**

**FIG 2**

**EP 3 899 110 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5171408 A
- RU 2010895 C1
- SU 419574
- US 20160349621 A1

### Littérature non-brevet citée dans la description

- **MITCHELL-SMITH et al.** *Journal for Manufacturing Processes,* 2018, vol. 31, 273-285